(19) Europäisches Patentamt
European Patent Office
Office européen des brevets

(11) **EP 3 724 938 B1**

(12) **EUROPÄISCHE PATENTSCHRIFT**

(45) Veröffentlichungstag und Bekanntmachung des Hinweises auf die Patenterteilung:
**13.03.2024   Patentblatt 2024/11**

(21) Anmeldenummer: **18830171.7**

(22) Anmeldetag: **12.12.2018**

(51) Internationale Patentklassifikation (IPC):
*H01M 10/654* (2014.01)   *H01M 50/119* (2021.01)
*H01M 50/121* (2021.01)   *H01M 50/122* (2021.01)
*H01M 50/126* (2021.01)   *H01M 50/211* (2021.01)
*H01M 10/6557* (2014.01)   *H01M 10/647* (2014.01)
*H01M 10/625* (2014.01)

(52) Gemeinsame Patentklassifikation (CPC):
**H01M 10/625; H01M 10/647; H01M 10/654;
H01M 10/6557; H01M 50/119; H01M 50/121;
H01M 50/122; H01M 50/126; H01M 50/211;**
H01M 2220/20; Y02E 60/10; Y02P 70/50

(86) Internationale Anmeldenummer:
**PCT/EP2018/084528**

(87) Internationale Veröffentlichungsnummer:
**WO 2019/115604 (20.06.2019 Gazette 2019/25)**

(54) **BATTERIEELEMENT MIT WÄRMELEITELEMENT**

BATTERY ELEMENT HAVING A THERMAL CONDUCTION ELEMENT

ÉLÉMENT DE BATTERIE POURVU D'UN ÉLÉMENT THERMOCONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2017   DE 102017130068**

(43) Veröffentlichungstag der Anmeldung:
**21.10.2020   Patentblatt 2020/43**

(73) Patentinhaber: **Erbslöh Aluminium GmbH**
**42553 Velbert (DE)**

(72) Erfinder:
• **SUCKE, Norbert William**
  **47269 Duisburg (DE)**
• **LOECHTE, Lothar**
  **40723 Hilden (DE)**

• **BECKER, Andreas**
  **42897 Remscheid (DE)**
• **GOETZ, Marcel**
  **42105 Wuppertal (DE)**

(74) Vertreter: **Buse, Mentzel, Ludewig**
**Patentanwaltskanzlei**
**Kleiner Werth 34**
**42275 Wuppertal (DE)**

(56) Entgegenhaltungen:
**DE-A1-102006 059 989   DE-A1-102008 055 162
DE-A1-102011 002 666   DE-A1-102012 219 057
DE-A1-102015 118 747   DE-B3-102014 016 471
US-A1- 2016 211 559**

**Beschreibung**

Die Erfindung betrifft ein Batterieelement mit mindestens einem Elektrodenstapel, welcher von einer äußeren, elektrischen Isolierung umgeben ist und mit mindestens einem Wärmeleitelement.

Bekannt sind Batteriezellen, insbesondere Lithium-Ionenzellen Pouch-Zellen, die aufgrund ihrer hohen Energiedichte und ihrem geringen Gewicht als vorteilhafte Zelltypen für die Anwendung in Kraftfahrzeugen angesehen werden. Solche Batteriezellen umfassen gestapelte oder gefaltete elektrochemisch aktive Schichten, welche durch Separatoren in Form von Kunststoff-Vliesen voneinander getrennt sind, um Kurzschlüsse zu verhindern. Diese Elektrodenstapel werden von einer flexiblen Außenfolie eingeschlossen. Diese Außenfolie wird bis auf eine Rand verschlossen und der so geformte Folienbeutels mit einem organischen Elektrolyten gefüllt. Anschließend wird der Folienbeutel geschlossen und versiegelt, wobei die Kontaktfahnen als Anschlüsse der Elektroden aus dem Folienbeutel herausragen. Diese Batteriezellen besitzen keine massive Außenhülle, was sie flexibel aber auch empfindlich gegenüber mechanischen Belastungen macht.

Aus dem deutschen Dokument DE 10 2010 055 599 A1 ist bekannt, die flexiblen Batteriezellen zwischen zwei benachbarten Rahmen einzuklemmen und mehrere solcher eingerahmter Batteriezellen zu einem Batteriemodul zusammenzufassen. Hierbei werden an der Oberseite des Batteriemoduls Kühlplatten vorgesehen, die in wärmeleitenden Kontakt mit den einzelnen Batteriezellen, nämlich mit deren Stirnseite, stehen. Beim Laden solcher Batteriezellen, insbesondere beim Schnellladen, kommt es zu einer Erwärmung, wodurch der Elektrolyt erhitzt wird und ein Überdruck in der Batteriezelle entsteht. Bei einer Überhitzung kann es zum Verdampfen des Elektrolyten und so zu einer Zerstörung der Batteriezelle kommen. Bei dem vorgenannten Dokument werden in den Rahmen ovale Öffnungen für den Druckabbau bei solchen Kurzschlüssen vorgesehen, so dass der Elektrolytdampf entweichen kann. Wünschenswert ist es, solche Überhitzungen zu verhindern.

Das Dokument US 2016/0211559 A1 beschreibt ein Batteriemodul, wo in einem Gehäuse einzelnen Batteriezellen nebeneinander angeordnet sind. Eine Kühlung erfolgt nur über die Gehäusewände.

Ein weiteres Batteriemodul zeigt DE 10 2012 219 057 A1. Die Batteriezellen liegen mit ihrer Unterseite an einen gekühlten Längsträger an, d.h. es werden nur sehr kleine Flächen der Batteriezellen gekühlt. Für ausreichende Stabilität ist ein zusätzlicher Querträger vorgesehen.

Das Dokument DE 10 2011 002 666 A1 beschreibt die Kühlung einer Pouchzelle in einer Energiespeichervorrichtung. Hier wird die Pouchzelle bei der Montage an zwei gegenüberliegenden Seitenflächen in wärmeleitenden Kontakt mit jeweils einem Kühlelement gebracht. Die in der Pouchzelle erzeugte Wärme wird durch Wärmeleitung auf die Kühlelemente übertragen und dann durch ein Kühlfluid, welches durch mindestens einen Strömungskanal der jeweiligen Kühlelemente fließt, abgeführt. Die Kühlelemente sind über Gleitschuhe an einer Trägerplatte der Energiespeichervorrichtung in vorgegebenem Abstand befestigt. Eine gute Wärmeableitung wird nur erzielt, wenn die Pouchzelle großflächig an ihren beiden Seiten in Kontakt mit den beiden Kühlkörpern ist. Fertigungstoleranzen können jedoch dazu führen, dass sich zwischen den Kühlelementen und der Pouchzelle Luftpolster bilden, welche die Wärmeableitung verschlechtern. Die gezeigten Kühlelemente sind relativ dick und haben damit auch ein unerwünscht hohes Gewicht.

Eine bessere Kühlung zeigt das Dokument DE 10 2011 107 716 A1. Hier ist ein Batterieelement gezeigt, welches an seiner einen Seitenfläche ein Isolationselement und an der anderen Seite ein Kühlelement besitzt. Das Kühlelement besteht aus zwei Metallblechen mit einer Polymerbeschichtung. Zwischen den Metallblechen ist eine Stegstruktur angeordnet, welche aus Aluminium oder einem Polymer bestehen kann. Zur Erzielung eines einteiligen Batterieelements mit integriertem Kühlelement wird das Kühlelement an seinen Enden abgeflacht oder unter Einbeziehung eines zusätzlichen Isolationskörper mit dem Isolationselement zu einer Umhüllung des Hauptkörpers der Batteriezelle verbunden. Die Vielzahl der Kühldurchgänge gewährleistet das Abführen der in der Batteriezelle erzeugten Wärme. Nachteilig ist die mehrlagige Konstruktion des Kühlelements.

Die Aufgabe der vorliegenden Erfindung besteht darin, ein verbessertes Batterieelement mit effizienterer Kühlung zur Verfügung zu stellen. Das Batterieelement soll insbesondere auch für Batteriemodule von Kraftfahrzeugen eingesetzt werden und hierfür ein möglichst geringes Gewicht aufweisen.

Diese Aufgabe wird mit einem Batterieelement mit den Merkmalen des Anspruchs 1 erfüllt. Vorteilhafte Ausführungen beschreiben die Unteransprüche.

Das neue Batterieelement wird ohne Rahmen in ein Gehäuse eines Batteriemoduls eingesteckt. Es umfasst mindestens einen Elektrodenstapel, der von einer äußeren, elektrischen Isolierung vollständig umgeben ist. Diese elektrische Isolierung umfasst eine äußere, flexible siegelfähigen Folie. Das Batterieelement ist mit einem der Kühlung oder Heizung dienendem Wärmeleitelement in Form eines oder mehrerer flacher Mehrkammerhohlprofile ausgestattet. Dieses Mehrkammerhohlprofil ist im Batterieelement integriert und von der äußeren, elektrisch isolierenden, siegelfähigen Folie zusammen mit den jeweiligen Elektrodenstapeln umhüllt. Das Mehrkammerhohlprofil besitzt im Inneren mehrere benachbart zueinander angeordnete, parallel verlaufende Kammern. Eine breite Seitenfläche des Mehrkammerhohlprofils steht in flächigen Kontakt mit der Seitenfläche mindestens eines isolierten Elektrodenstapels und der jeweilige isolierte Elektrodenstapel ist mit dem Mehrkammerhohlprofil verbunden.

Das neue Batterieelement stellt eine Verbesserung der bekannten Pouch-Zelle dar. In dem Batterieelement ist neben einer oder mehreren Batteriezellen, insbesondere Lithium-Ionen-Zellen, auch ein Wärmeleitelement in Form eines oder mehrerer Mehrkammerhohlprofile integriert. Dieses der Kühlung oder gegebenenfalls auch der Heizung der Batteriezelle dienende Mehrkammerhohlprofil ist flach ausgebildet, besitzt zwei gegenüberliegende Breitseiten sowie im Inneren mehrere benachbart zueinander angeordnete und parallel durch das Mehrkammerhohlprofil verlaufende Kammern. Durch die Kammern strömt ein Temperiermedium, beispielsweise zum Kühlen eine Kühlflüssigkeit, ein Kältemittel oder gasförmige Medien, wie z.B. Luft, um die in der Batteriezelle entstehende Wärme abzutransportieren. Nachfolgend wird eine Kühlung der Batteriezelle beschrieben, auch wenn das Mehrkammerhohlprofil ebenso zum Erwärmen der Batteriezelle dienen kann. Der Wärmetransport ist dabei optimal, da eine breite Seitenfläche des Mehrkammerhohlprofils in flächigen Kontakt mit der Seitenfläche mindestens eines isolierten Elektrodenstapels einer Batteriezelle steht. Nachfolgend wird der Einfachheit halber für die inneren Bestandteile der Batteriezelle, nämlich die beiden Elektroden mit den Separatoren und dem Elektrolyten, der Begriff Elektrodenstapel verwendet. Hierbei können die beiden Elektroden flach ausgebildet sein oder mehrfach gefaltet vorliegen.

Beispielsweise liegt ein Elektrodenstapel an der Oberseite und ein weiterer Elektrodenstapel liegt an der Unterseite des Mehrkammerhohlprofils flächig an. Hierbei ist das Mehrkammerhohlprofil mittig zwischen den zwei Elektrodenstapeln im Batterieelement integriert.

Bei einer vorteilhaften Ausführungsform bildet eine Seitenwand des Mehrkammerhohlprofils eine Wandung der Batteriezelle, d.h. das Mehrkammerhohlprofil und eine äußere siegelfähige Folie umhüllen zusammen einen Elektrodenstapel mit den Separatoren und dem Elektrolyten. Das Mehrkammerhohlprofil besitzt für die Verbindung mit der siegelfähigen Folie eine elektrisch isolierende Kunststoffbeschichtung. Aufgrund dieser elektrisch isolierenden Kunststoffbeschichtung ist das Mehrkammerhohlprofil einerseits elektrisch isoliert gegenüber dem Elektrodenstapel und andererseits erlaubt diese aus thermoplastischen Kunststoffen bestehende Beschichtung an der Außenfläche des Mehrkammerhohlprofils eine Verbindung mit der den Elektrodenstapel abdeckenden siegelfähigen Folie in den vorgesehenen Verbindungsbereichen. Für eine solche Verbindung der Folie mit dem Mehrkammerhohlprofil ist diese vorzugsweise so breit ausgebildet, dass Verbindungsbereiche an den Längsrändern des Mehrkammerhohlprofils vorgesehen werden können. Da die Längsränder des Mehrkammerhohlprofils bei einem solchen Versiegelungsvorgang durch Druckkräfte und Wärme belastet werden, sind bei einer vorteilhaften Ausführungsform an diesen Längsrändern keine Kammern vorgesehen, so dass es bei einer Verbindung der siegelfähigen äußeren Folie mit den Längsrändern des Mehrkammerhohlprofils trotz eines Wärmeeintrags und mechanischen Belastungen nicht zu Stabilitätsverlusten an dem Mehrkammerhohlprofil kommt.

Bei einer weiteren Ausführungsform ist der Elektrodenstapel wie bei einer bekannten Pouch-Zelle von einer äußeren, elektrisch isolierenden, siegelfähigen Folie vollständig umgeben. Bei diesem neuen Batterieelement bilden dann das Mehrkammerhohlprofil zusammen mit einer oder mehreren bekannten Batteriezellen eine Einheit, d.h. ein integrales Bauteil. Bei der einfachsten Ausführung ist die Batteriezelle an das Mehrkammerhohlprofil angedrückt und mechanisch mit diesem verspannt. Beispiele für solche elastischen Spannelemente sind eine Folie oder ein Gewebe. Bei einer weiteren Ausführungsform ist mindestens eine bekannte Batteriezelle, d.h. ein Elektrodenstapel mit einer äußeren, elektrisch isolierenden, siegelfähigen Folie, anliegend an den breiten Seitenflächen des Mehrkammerhohlprofils angeordnet und von einer weiteren äußeren Folien umschlossen und dadurch an das Mehrkammerhohlprofil angedrückt und flächig anliegend an dem Mehrkammerhohlprofil gehalten. Eine solche zusätzliche, äußere Folie kann beispielsweise auch in Form eines Schlauches über eine solche Anordnung, nämlich die Batteriezellen und das dazwischen angeordnete Mehrkammerhohlprofil, gezogen sein, wobei die Enden des Schlauchs mit dem beschichteten Mehrkammerprofil verbunden sind. Darüber hinaus ist auch eine Umwicklung mit einer Folie zielführend.

Bei einer weiteren Ausführungsform ist die Batteriezelle über ihre äußere, siegelfähige Folie mit dem Mehrkammerhohlprofil verbunden. Das Mehrkammerhohlprofil besitzt hierfür die elektrisch isolierende, thermoplastische Kunststoffbeschichtung. Diese Kunststoffbeschichtung des Mehrkammerhohlprofils und die siegelfähige Folie der Batteriezelle sind zur Bildung des neuen Batterieelements miteinander verbunden. Die stoffschlüssige Verbindung wird durch Verschweißen bzw. Versiegeln des thermoplastischen Kunststoffmaterials des Mehrkammerhohlprofils mit dem thermoplastischen Material der äußeren Folie der Batteriezelle erhalten.

Bei einer weiteren Ausführung wird eine Verbindung zwischen der Folie der Batteriezelle und dem Mehrkammerhohlprofil erzielt, indem zwischen beiden eine siegelfähige Zwischenfolie angeordnet ist. Diese Zwischenfolie wird mit dem Mehrkammerhohlprofil verbunden und geht in gewünschten Verbindungsbereichen eine stoffschlüssige Verbindung mit der Folie der Batteriezelle ein.

Eine einfache Verbindungsmöglichkeit zwischen dem Mehrkammerhohlprofil und der äußeren Folie der Batteriezelle ist auch eine Klebeverbindung. Für eine gute Haftung an dem Mehrkammerhohlprofil wird die Oberfläche des Mehrkammerhohlprofils vorbehandelt. Eine solche Vorbehandlung besteht beispielsweise in einer Plasmabehandlung, einer Laserbehandlung, einem Eloxieren, einer mechanischen Oberflächenbehandlung oder besonderen Beschichtungen, um die Haftung der Oberfläche des Mehrkammerhohlprofils zu verbessern. Als Beschichtungen kommen Konversionsschichten oder durch Lichtbogen erzeugte Verzinkungen der Außenflächen des Mehrkammerhohlprofils in Frage. Bei einer großflächigen Klebeverbindung zwischen der äußeren Folie der Batteriezelle und dem Mehrkammerhohlprofil ist zu berücksichtigen, dass sich die Batteriezelle beim Laden und Entladen durch die Wärmeentwicklung ausdehnt. Dies ist durch Vorsehen einer Dehnungsfuge zu berücksichtigen. So wird beispielsweise zwischen der Batteriezelle und dem Mehrkammerhohlprofil ein klebstofffreier Bereich vorgesehen, vorzugsweise wird dieser Bereich in Querrichtung des Mehrkammerhohlprofils angeordnet.

In der vorbeschriebenen Weise ist mindestens ein Elektrodenstapel mit einer Seitenfläche des Mehrkammerhohlprofils verbunden. Diese Elektrodenstapel sind jeweils über eine äußere siegelfähige Folie abgedeckt oder von einer äußeren Folie umfasst. Auf diese Weise ist das Mehrkammerhohlprofil integraler Bestandteil des neuen Batterieelements, wobei die einseitig oder beidseitig angeordneten Elektrodenstapel jeweils großflächig an dem Mehrkammerhohlprofil anliegen.

Hierbei ist es auch möglich, dass mehrere nebeneinander angeordnete Elektrodenstapel oder Batteriezellen mit der Oberseite und/oder Unterseite des Mehrkammerhohlprofils verbunden sind. Bei einer Anordnung mehrerer Elektrodenstapel oder mehrerer Batteriezellen sowohl an der Oberseite als auch an der Unterseite des Mehrkammerhohlprofils können diese gegenüberliegend oder auch versetzt zueinander angeordnet sein. Des Weiteren ist es auch möglich, die an der Unterseite des ersten Mehrkammerprofils angeordneten Elektrodenstapel mit ihrer gegenüberliegenden Breitseite an einem weiteren Mehrkammerhohlprofil zu befestigen, so dass sich ein Batterieelement aus 5 übereinander angeordneten Lagen ergibt, nämlich Elektrodenstapel, Mehrkammerhohlprofil, Elektrodenstapel, Mehrkammerhohlprofil, Elektrodenstapel.

Bei einer weiteren Ausführung wird eine Verbindung zwischen der Batteriezelle und dem Mehrkammerhohlprofil durch Umwickeln erzielt. Hier ist die Batteriezelle sehr flach, besitzt flache langgestreckte Elektroden, welche durch Separatoren getrennt und von einem Folienbeutel umfasst sind. Diese flache Batteriezelle hat eine vergleichsweise große Beutellänge ausgehend von dem einen Ende, an welchem die Kontaktfahnen aus dem Folienbeutel herausreichen bis zum anderen Ende, den Beutelboden. Diese lange beutelartige Batteriezelle wird um das Mehrkammerhohlprofil herumgewickelt und am Mehrkammerhohlprofil gehalten.

In vorteilhafter Weise ist für die Temperierung der Batteriezelle ein Mehrkammerhohlprofil als integraler Bestandteil der Batteriezelle vorgesehen. Das Mehrkammerhohlprofil dient einerseits der Erwärmung oder andererseits dem Wärmeabtransport der in dem Batterieelement entstehenden Wärme und wird dazu von einem Kühlmedium durchströmt. Dieses Mehrkammerhohlprofil ist vorzugsweise ein stranggepressten Profil aus Aluminium oder einer Aluminiumlegierung. Dieser Werkstoff besitzt zum einen gute Wärmeleitungseigenschaften und kann darüber hinaus in vorteilhafter Weise als stranggepresstes Profil in einer sehr geringen Höhe erzeugt werden. Die Höhe H des Mehrkammerhohlprofils beträgt 0,3 mm bis 10 mm, vorzugsweise von 0,8 bis 3 mm. Damit ist ein Batterieelement geringer Aufbauhöhe und geringen Gewichts herstellbar. Werden beispielsweise für ein Batterieelement zwei Elektrodenstapel mit je einer Höhe $H_B$ von etwa nur 8 mm und ein Mehrkammerhohlprofil mit einer Höhe H von 3 mm verwendet, hat eines solchen Batterieelement mit integriertem Wärmeleitelement eine Aufbauhöhe von weniger als 20 mm. Die Länge des Batterieelements, d.h. die Länge des Mehrkammerhohlprofils, kann dem Anwendungszweck entsprechend beliebig ausfallen. Die Breite des Batterieelements wird bevorzugt in solchen Breiten vorgesehen, die optimal strangpressbar sind, z.B. bis zu einer Breite von 200 mm.

Alternativ kann das Mehrkammerhohlprofil auch aus Metallblech bestehen, beispielsweise aus einem gefalteten Metallblech oder durch ein Roll-Bond-Verfahren hergestellt sein.

Bei allen vorgenannten Ausführungen stehen die Elektrodenstapel in einem Flächenkontakt mit dem Mehrkammerhohlprofil, d.h. der Wärmetransport beim Schnellladen einer solchen Batteriezelle erfolgt über den kürzesten Weg von der am weitesten entfernt in der Batteriezelle angeordneten elektrochemisch aktiven Schicht des Elektrodenstapels zu der Oberfläche des Mehrkammerhohlprofils. Dieser Vorteil des neuen Batterieelements drückt sich in einem Geometriefaktor G aus, nämlich

$$G = H_B\ /\ H$$

dem Verhältnis der Aufbauhöhe der Batteriezelle $H_B$ zur Höhe H des Mehrkammerhohlprofils. Dieser Geometriefaktor G liegt bei den neuen Batterieelementen zwischen Werten von 1,3 und höchstens 25, vorzugsweise zwischen 3 und 7. Diese Werte verdeutlichen, dass der gesamte Elektrodenstapel gut temperiert wird, nämlich insbesondere auch die am weitesten entfernt vom Mehrkammerhohlprofil angeordnete elektrochemisch aktive Schicht des Elektrodenstapels in der Batteriezelle.

Hierbei wird die Wärme über die von Kühlmedium durchströmten Kammern des Mehrkammerhohlprofils aus dem Batterieelement herausgeführt. Dazu sind die Kammern an den Stirnseiten des Mehrkammerhohlprofils über Anschlüsse mit einem Kühlsystem oder einem Sammler verbunden. Bei sehr langen Batterieelementen, insbesondere bei mehreren in Längsrichtung des Mehrkammerhohlprofils vorgesehenen Batteriezellen, durchströmt das Kühlmedium z.B. w-förmig oder z-förmig das Mehrkammerhohlprofil. Dabei sind die Anschlüsse nur an einer Stirnseite des Mehrkammerhohlprofils angeordnet. Dies hat den Vorteil, dass die Temperaturunterschiede des Kühlmediums in dem Batterieelement minimiert werden.

In vorteilhafter Weise gewährleistet das neue Batterieelement eine gute thermische Anbindung der Elektrodenstapel an das Mehrkammerhohlprofil, was durch eine thermische Kennzahl TK ausgedrückt werden kann. Diese thermische Kennzahl TK drückt aus wie groß der temperierte Bereich des Mehrkammerhohlprofils im Verhältnis zum Kontaktbereich der Elektrodenstapel an dem Mehrkammerhohlprofil ist.

$$ TK = \sum B_{K1-n} \ / \ (B_E) $$

$B_E$ ist die Breite des Kontaktbereichs eines Elektrodenstapels an dem Mehrkammerhohlprofil. $B_K$ ist die Breite einer Kammer des Mehrkammerhohlprofil, welche durch ein Fluid temperiert wird. Die Summe aller Kammerbreiten wird mit der Breite des Kontaktbereichs ins Verhältnis gesetzt. Die neuen Batterieelemente zeigen sehr gute thermische Kennzahlen TK von größer 0,8.

In jedem vorbeschriebenen Anwendungsfall wird eine äußere siegelfähige Folie verwendet. Dies kann eine Verbundfolie sein, wie sie für bekannte Batteriezellen eingesetzt wird. Solche Folien besitzen auf einer Seite eine siegelfähige, thermoplastische Kunststoffschicht, eine Zwischenschicht in Form einer Aluminiumfolie als Diffusionssperre und auf der äußeren Seite wiederum ein Kunststoffschicht. Die innere Schicht dieser Verbundfolien besteht insbesondere aus thermoplastischem Kunststoffmaterial, wie beispielsweise aus Polyolefinen, bevorzugt aus Polypropylen, welches durch eine Wärmeanwendung schmilzt und mit einer elektrisch isolierenden, thermoplastischen Kunststoffbeschichtung an der Oberfläche des Mehrkammerhohlprofils verbindbar ist. Bei dieser Kunststoffbeschichtung auf dem Mehrkammerhohlprofil handelt es sich ebenfalls um einen siegelfähigen, d.h. durch Wärme schweißbaren Kunststoff, wie beispielsweise um Polyester oder um Polyolefine. Auch hier wird z.B. Polypropylen eingesetzt, welches in Form von Pulver durch eine Pulverbeschichtung auf das Mehrkammerhohlprofil aufgebracht sein kann. Darüber hinaus kommt auch eine Nasslackbeschichtung in Frage oder es wird eine Kunststoff-Folie auf die Oberfläche des Mehrkammerhohlprofils aufgebracht, beispielsweise durch eine Folienlaminierung. Diese thermoplastische Kunstbeschichtung ist vorzugsweise vollflächig auf der Oberfläche des Mehrkammerhohlprofils vorgesehen, insbesondere um eine entsprechende elektrische Isolierung gegenüber dem Elektrodenstapel sicherzustellen und andererseits um eine Verbindung mit der äußeren Folie entlang der Längsränder aber auch an einer beliebigen Stelle über die Breite des Mehrkammerhohlprofils hinweg, nämlich zum umfänglichen Einschluss eines Elektrodenstapels. Aus einer solchen Umhüllung des Elektrodenstapels werden ausschließlich die Kontaktfahnen der Elektroden herausgeführt. Darüber hinaus können die Stirnseiten des Mehrkammerhohlprofils die folienumhüllten Elektrodenstapel überragen, um die inneren Kammern einfacher mit entsprechenden Anschlüssen für die Kühlung oder mit Sammlern zu verbinden.

In vorteilhafter Weise erlangt das Batterieelement durch die integrierte Kühlung bzw. Heizung in Form des Mehrkammerhohlprofils auch eine eigene Stabilität und kann in dieser stabilen Form ohne Rahmen in ein Gehäuse gesteckt werden, um ein Batteriemodul zu bilden, wobei durch das dünne und leichte Mehrkammerhohlprofil der Gewichtsvorteil gegenüber bekannten Batterieelementen mit gerahmten Batteriezellen nicht verlorengeht.

Darüber hinaus sind die Elektrodenstapel bzw. Batteriezellen mit ihrer Oberfläche auf kürzester Distanz potentialfrei an dem Mehrkammerhohlprofil befestigt, wobei das Mehrkammerhohlprofil an den Kontaktflächen zu einem Elektrodenstapel in dem Batterieelement über eine Kunststoffisolierung, z.B. über eine Kunststoffbeschichtung, elektrisch isoliert ist.

Die Zeichnung zeigt nachfolgend ein Ausführungsbeispiel. Die Erfindung ist nicht auf dieses Ausführungsbeispiel beschränkt. Die Zeichnung zeigt:

Fig. 1     einen Querschnitt durch ein neues Batterieelement,

Fig. 2     einen Querschnitt durch das Mehrkammerhohlprofil,

Fig. 3     eine Draufsicht auf das Batterieelement gemäß Fig. 1,

Fig. 4     eine perspektivische Ansicht auf einen Teil eines Batteriemoduls mit Batterieelementen,

Fig. 5     eine Draufsicht von Fig. 4,

Fig. 6     eine perspektivische Ansicht eines weiteren Batterieelements,

Fig. 7     eine Draufsicht auf einen Teil eines weiteren Batteriemoduls mit Batterieelementen,

Fig.8     eine perspektivische Ansicht auf einen Teil eines Batteriemoduls mit Batterieelementen von Fig. 7,

Fig. 9     eine perspektivische Ansicht eines weiteren Batterieelements und

Fig.10     ein vergrößerter Ausschnitt von Fig. 9.

In den Figuren werden für gleichartige Bauteile in den unterschiedlichen Ausführungsformen die gleichen Bezugszeichen verwendet.

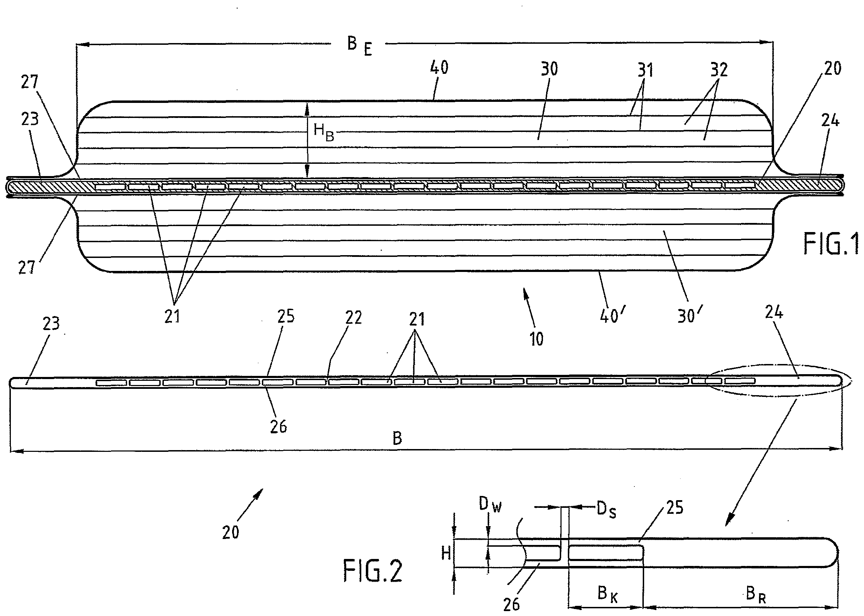

Das in Fig. 1 gezeigte neue Batterieelement 10 umfasst zwei Elektrodenstapel 30, 30', die beidseitig von einem für die Temperierung vorgesehenen Wärmeleitelement angeordnet sind. Das Wärmeleitelement ist ein flaches Mehrkammerhohlprofil 20. Die Elektrodenstapel 30, 30' sind nur abstrakt angedeutet. Sie umfassen Elektroden 31, die gefaltet als aktive Schichten zusammen mit einem Elektrolyten vorgesehen sind und durch Separatoren 32 voneinander getrennt vorliegen. Nach außen sind die Elektrodenstapel 30, 30' von einer äußeren Hülle 40 bzw. 40' umgeben. Im Vergleich zu einer bekannten Pouch-Zelle, wo ein Elektrodenstapel ebenfalls von einer äußeren Hülle umgeben sind, umfasst das neue Batterieelement 10 zwei Elektrodenstapel und als integralen Bestandteil zusätzlich das mittig angeordnete Mehrkammerhohlprofil 20. Dieses besitzt mehrere nebeneinander angeordnete und parallel verlaufende Kammern 21. An der breiten Außenseite ist das Mehrkammerhohlprofil 20 vollflächig mit einer Kunststoffbeschichtung 27 versehen. Diese Kunststoffbeschichtung 27 ist in diesem Fall eine Polypropylen-Schicht. Diese Schicht ist so dick, dass das Mehrkammerhohlprofil 20 gegenüber den Elektrodenstapeln 30, 30' elektrisch isoliert ist. In gleicher Weise umfassen die äußeren Folien 40, 40' eine elektrisch isolierende Schicht, so dass das Batterieelement 10 nach außen potentialfrei ist. Bei den äußeren Folien 40, 40' handelt es sich in diesem Fall um eine dreischichtige Verbundfolie. Die äußere und innere Schicht bestehen aus Polypropylen. Zwischen den Polypropylen-Schichten ist eine Aluminiumfolie als Diffusionssperre vorgesehen. Die Folien 40, 40' sind an den Längsrädern 23, 24 des Mehrkammerhohlprofils 20 mit der Kunststoffbeschichtung 27 des Mehrkammerhohlprofils 20 verbunden. Die Verbindung wurde durch ein unter Wärmeanwendung vorgenommenes Anpressen der Ränder der Folien 40, 40' an die Längsränder 23, 24 des Mehrkammerhohlprofils 20 erzielt, wobei das Polypropylen der Folien 40, 40' mit der Polypropylen-Kunststoffbeschichtung 27 verschweißt.

In diesem Fall wurden zwei Folien 40, 40' verwendet. Es ist auch möglich, eine einzige Folie zu verwenden, die die gesamte Batteriezelle umgibt und beispielsweise mit Folienkanten an einem Längsrand 23 des Mehrkammerhohlprofils 20 mit der Kunststoffbeschichtung 27 des Mehrkammerhohlprofils 20 verbunden wird.

Darüber hinaus ist es möglich, bekannte Batteriezellen zu verwenden, diese beidseitig von dem Mehrkammerhohlprofil 20 anzuordnen und mit einer Polypropylen-Folie als äußere Schicht zu umfassen und mit dem Mehrkammerhohlprofil 20 zu verbinden und somit mit einer Kühlung zu versehen. Hierbei kann z.B. für zwei Batteriezellen eine gemeinsame Folie vorgesehen sein, die nur an einem Längsrand 23 befestigt ist oder einen Folienschlauch über die Anordnung gezogen werden, der an seinen Stirnseiten über die Breite des Mehrkammerhohlprofils mit dem Mehrkammerhohlprofil 20 verbunden ist.

Sind bekannte Batteriezellen an ihrer Außenseite mit einer siegelfähigen Folie versehen, so ist es auch möglich, diese Batteriezellen über ihre äußere Hülle mit dem Mehrkammerhohlprofil 20 zu verbinden.

Für ein solches neues Batterieelement 10 wird eine Kühlung oder Heizung in Form eines Mehrkammerprofils 20 vorgesehen. Dieses Mehrkammerprofil 20 ist in Fig. 2 noch einmal einzeln gezeigt. Es besteht aus einem stranggepressten Profil aus Aluminium oder einer Aluminiumlegierung, welches vorzugsweise eine Höhe H von 0,3 bis 5 mm bei Verwendung einer Kühlflüssigkeit und von 0,5 mm bis 10 mm bei Verwendung eines gasförmigen Kältemittels besitzt. In diesem Fall beträgt die Höhe 1,5 mm. Die im stranggepressten Profil erzeugten Kammern 21 sind durch Stege 22 getrennt. Diese Stege 22 geben dem Mehrkammerhohlprofil 20 eine ausreichende Stabilität und sorgen dafür, dass das Mehrkammerhohlprofil nach dem Strangpressen nicht im Bereich der Kammern 21 einfällt, da die Wanddicke Dw in diesem Fall 0,35 mm beträgt, ebenso wie die Dicke der Stege Ds. Die Wanddicken Dw und Dicken der Stege Ds eines Mehrkammerhohlprofils 20 liegen bei 0,08 mm bis 2 mm, vorzugsweise von 0,15 mm bis 0,5 mm, in diesem Beispiel bei 0,35 mm, so dass sich eine Kammerhöhe von 0,8 mm ergibt. Bei Verwendung eines gasförmigen Kältemittels liegen Wanddicken Dw und Dicken der Stege Ds eines Mehrkammerhohlprofils bei 0,15 mm bis 5 mm. Die rechteckigen Kammern 21 des Mehrkammerhohlprofils 20 haben in diesem Beispiel eine Breite $B_K$ von 4,1 mm. Die Kammern 21 können neben der rechteckigen Form auch eine andere Form aufweisen. Die Kammern 21 sind benachbart über einen wesentlichen Bereich der Breite des Mehrkammerhohlprofils 20 vorgesehen. Für eine gute Wärmeableitung ist es vorteilhaft, dass das Mehrkammerhohlprofil 20 von einem großen Volumenstrom an Fluid durchströmt wird. Dies wird durch eine Vielzahl an Kammern 21 gewährleistet.

Wie in Fig. 1 zu ersehen, sind unter- bzw. oberhalb der Elektrodenstapel 30, 30' Kammern 21 des Mehrkammerhohlprofils 20 angeordnet, so dass die in den Elektrodenstapeln 30, 30' erzeugte Wärme schnell über den flächigen planen Kontakt mit dem Mehrkammerprofil 20 abtransportiert wird, nämlich über die Wärmeleitung des Aluminiumprofils und den Wärmetransport mittels eines durch die Kammern 21 fließenden Mediums, z.B. eines Kühlmittels oder eines Kältemittels. Als Kühlmittel wird beispielsweise Wasser-Glykol-Mischung eingesetzt. Als Kältemittel sind gasförmige Medien wie z.B. Kohlendioxid oder fluorierte Kohlenwasserstoffe bekannt. In vorteilhafter Weise gewährleistet das neue Batterieelement eine gute thermische Anbindung des Mehrkammerprofils 20 an die Elektrodenstapel 30, 30', was durch die thermische Kennzahl TK ausgedrückt wird. Diese thermische Kennzahl TK

$$TK = \sum B_{K1\text{-}n} \; / \; (B_E)$$

Ergibt sich in diesem Beispiel aus der Breite $B_E$ von 87 mm, nämlich der Breite der Kontaktzone der Elektrodenstapel 30, 30' an dem Mehrkammerhohlprofil 20, siehe Fig. 1. Jede rechteckige Kammer 21 des Mehrkammerhohlprofils 20 hat eine Breite $B_K$ von 4,1 mm. Die Summe aller Kammerbreiten ergibt 20 x 4,1 mm = 82 mm. Die thermische Kennzahl TK beträgt also in diesem Fall TK = 82 / 87 = 0,94. Bei runden Kammern wird der Durchmesser der runden Kammern für den Wert $B_K$ eingesetzt. Bei anders geformten Kammern, wie beispielsweise dreieckigen Kammern, können die Stege zwischen den Kammern schräg gestellt sein. In diesen Fällen wird die Projektion der Kammerbreite auf die Batteriefläche für den Wert $B_K$ eingesetzt.

Der Vorteil des neuen Batterieelements 10 drückt sich auch in dem Geometriefaktor G aus, welcher das Verhältnis der Aufbauhöhe $H_B$ der Batteriezelle zur Höhe H des Mehrkammerhohlprofils 20 darstellt. Die Aufbauhöhe $H_B$ der Batteriezelle ist in Fig. 1 eingezeichnet und stellt die Höhe von Elektrodenstapel 30 einschließlich Folie 40 dar. Der Wert $H_B$ liegt bei 8 mm. Das verwendete Mehrkammerhohlprofils 20 hat eine Höhe H von 1,5 mm. Damit ergibt sich ein Geometriefaktor von G = 8 / 1,5 = 5,3. Gleiches gilt für den Elektrodenstapel 30' an der Unterseite des Mehrkammerhohlprofils 20. Der Geometriefaktor G = 5,3 und die thermische Kennzahl TK=0,94 verdeutlichen, dass die beiden Elektrodenstapel 30 bzw. 30' gut temperiert sind, nämlich insbesondere auch die am weitesten entfernt vom Mehrkammerhohlprofil 20 angeordnete elektrochemisch aktive Schicht 31 der Elektrodenstapel 30, 30'.

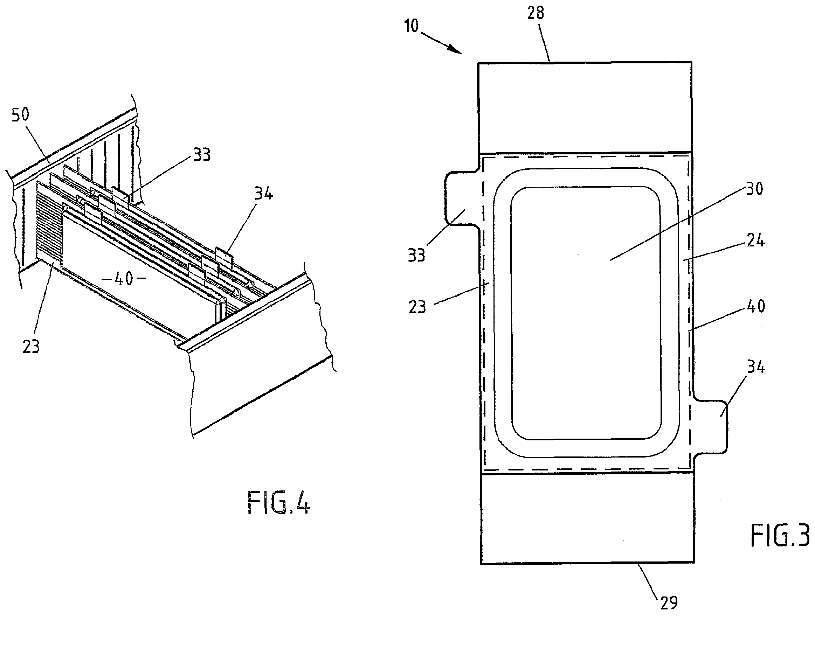

Beim Beispiel von Fig. 1 sind an dem Mehrkammerhohlprofil 20 im Bereich der Längsräder 23, 24 keine Kammern 21 vorgesehen. Dadurch erhält das dünne Mehrkammerhohlprofil 20 eine ausreichende Stabilität. Zur Herstellung des neuen Batterieelements 10 wird ein Mehrkammerhohlprofilstrang mit einem Querschnitt, wie in Fig. 2 gezeigt, stranggepresst. Nach dem Strangpressen wird dieser Mehrkammerhohlprofilstrang vollumfänglich mit Polypropylen beschichtet und nachfolgend wird eine gewünschte Länge vom stranggepressten Profilstrang abgetrennt, die als Mehrkammerhohlprofil 20 für das Batterieelement 10 dient. Auf der Ober- und Unterseite 25, 26 des Mehrkammerhohlprofils 20 werden die Elektrodenstapel 30, 30' angeordnet und von einer äußeren Folie 40, 40' abgedeckt, die an ihren Längskanten dann mit den Längsrädern 23, 24 des Mehrkammerhohlprofils 20 und des Weiteren an ihren stirnseitigen Enden über die Breite des Mehrkammerhohlprofils 20, wie in Fig. 3 durch die gestrichelte Linie gezeigt, verbunden wird. Die äußere Folie 40, 40' umfasst dabei den Elektrodenstapel 30, 30' mit allen Bestandteilen, nämlich Elektroden 31, Separatoren 32 und Elektrolyten. Aus der äußeren Folie 40, 40' ragen nur die Kontaktfahnen 33, 34 heraus. In Fig. 3 ist exemplarisch die Kontaktfahne 33 als Anschluss der Kathode am Längsrand 23 und die Kontaktfahne 34 der als Anschluss der Anode am Längsrand 24 angeordnet. Die Kontaktfahnen 33, 34 können je nach Bauart des Batteriemoduls, in welchem die Batterieelemente 10 eingebaut werden, am gleichen Längsrand 23, 24 oder auch an einer anderen Seite aus der äußeren Folie herausgeführt sein. Das Mehrkammerhohlprofil 20 überragt im Beispiel von Fig.3 mit ihren Stirnseiten 28, 29 die Elektrodenstapel 30, 30', so dass die Kammern 21 des Mehrkammerhohlprofils 20 in einfacher Weise mit entsprechenden Anschlüssen 60 oder Sammlern 50 verbunden werden können. Bei einer besonderen Ausführungsform ist das Batterieelement mit den Anschlüssen oder Sammlerrohren verlötet, insbesondere durch Hartlöten.

Bei Bedarf kann ein Längsrand 23, 24 mit einem Thermoelement verbunden werden, um die Wärmeentwicklung in dem Batterieelement oder einem Batteriemodul zu überwachen.

Wie insbesondere die Fig. 1 und 3 zeigen, stellt das neue Batterieelement 10 gegenüber einer bekannten Batteriezelle ein sehr stabiles Element dar. Die Stabilität wird durch das integrierte Mehrkammerhohlprofil 20 gewährleistet und dies trotz der geringen Höhe H und dem damit geringen Gewicht des zusätzlich vorgesehenen Mehrkammerhohlprofil 20. Das gut handhabbare und potentialfreie Batterieelement 10 hat zudem selbst nur eine geringe Höhe von weniger 20 mm.

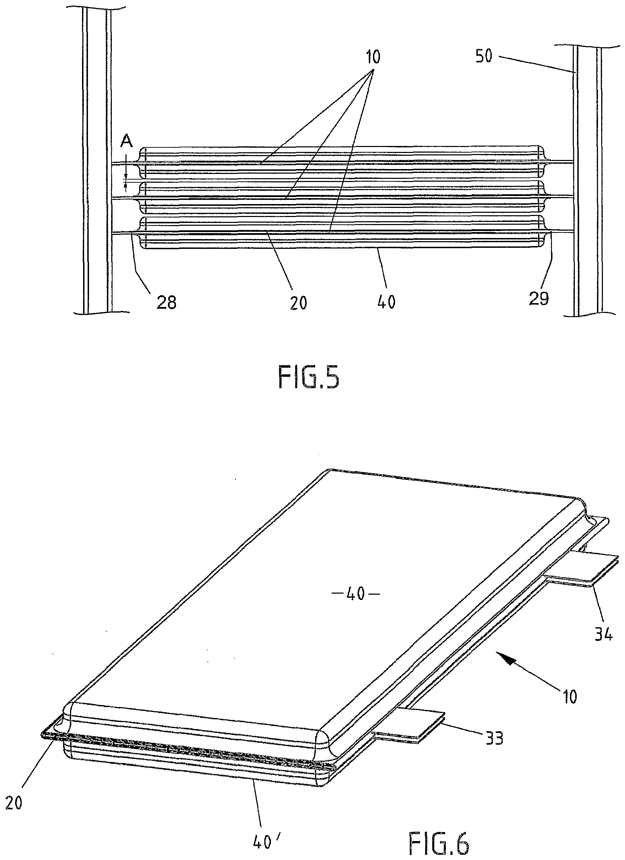

Mehrere Batterieelemente 10 können zu einem Batteriemodul entsprechender Größe zusammengesetzt werden, beispielsweise hochkant eingesetzt werden, wie dies die Fig. 4 bzw. 5 für eine weitere Ausführungsform eines Batterieelements 10 zeigen. Es wurden die gleichen Bezugsziffern für die gleichen Elemente des Batterieelements 10 verwendet. Zwischen den eingesetzten Batterieelementen 10 ist ein Abstand A eingehalten, der eine thermische Ausdehnung der elektrochemisch aktiven Schichten der Elektrodenstapel 30, 30' zulässt, ohne dass sich benachbart angeordnete Batterieelemente 10 berühren, siehe Fig. 5. Die Kammern 21 der Mehrkammerhohlprofile 20 sind hierbei beispielsweise an Sammelrohre 50 unter Ausbildung eines Strömungspfades angeschlossen, welche das Temperiermedium sammeln oder weiterleiten. Im Gegensatz zu dem Batterieelement 10 von Fig. 3 ragen in diesem Fall von Fig. 4 die Kontaktfahnen 33, 34 an der gleichen Seite aus der äußeren Folie 40 und können auf einfache Weise elektrisch verbunden werden.

Fig. 6 zeigt ein weiteres erfindungsgemäßes Batterieelement 10 mit einem Mehrkammerhohlprofil 20 als Wärmeleitelement zur Temperierung von Elektrodenstapeln 30, 30', welche hier nicht gezeigt sind. Es sind nur die Kontaktfahnen 33, 34 sichtbar, die an einer Seite aus dem Batterieelement 10 heraus ragen. Die Elektrodenstapel 30, 30' liegen flächig plan an der Oberseite und an der Unterseite an dem Mehrkammerhohlprofil 20 an und sind nach außen durch die Folien 40 bzw. 40' begrenzt und geschützt. Die Folien 40, 40' sind mit der Kunststoffbeschichtung 27 des Mehrkammerhohlprofils 20 verbunden. In diesem Beispiel sind auch Kammern 21 im Bereich der Längsränder 23, 24 angeordnet. Ein Anpressen zur Verbindungsbildung ist durch eine etwas größere Wanddicke des Mehrkammerhohlprofils 20 erzielt worden. Auch in diesem Fall handelt es sich bei dem Mehrkammerhohlprofil 20 um ein stranggepresstes Aluminiumprofil. Dieses Batterieelement 10 zeigt eine thermischen Kennzahl von größer 0,8, nämlich 0,899.

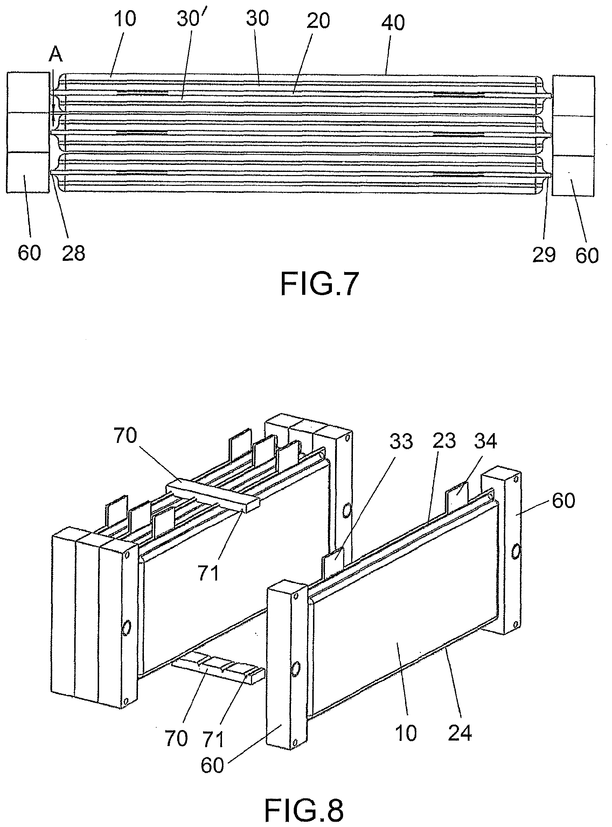

Fig. 7 zeigt ein Batteriemodul aus erfindungsgemäßen Batterieelementen 10 mit jeweils einem Mehrkammerhohlprofil 20 als Wärmeleitelement zur Temperierung von Elektrodenstapeln 30, 30', welche an der Ober- und Unterseite des Mehrkammerhohlprofil 20 gehalten sind. Zwischen den Batterieelementen 10 im Batteriemodul ist ein Abstand A eingehalten, der eine thermische Ausdehnung der elektrochemisch aktiven Schichten der Elektrodenstapel 30, 30' zulässt. Das Batterieelement 10 umfasst in diesem Fall zusätzlich Anschlüsse 60 an beiden Stirnseiten 28, 29 der jeweiligen Mehrkammerhohlprofile 20. Die Anschlüsse 60 dienen zum Weiterleiten des durch die Kammern 21 der Mehrkammerhohlprofile 20 strömenden Temperiermediums. Mehrere solcher Batterieelemente 10 lassen sich zu einem Batteriemodul gewünschter Größe zusammenfassen, wie dies Fig. 8 zeigt. Hierbei sind Abstandhalter 70 vorgesehen, die ein- oder beidseitig aufgesteckt sind und lange Batteriemodule stabilisieren. Im gezeigten Beispiel sind diese Abstandhalter 70 als Leisten ausgebildet und besitzen an einer Seite in regelmäßigen Abständen Nuten 71, in welche die Längsränder 23, 24 der Mehrkammerhohlprofile 20 eingreifen können. Über solche Abstandhalter 70 kann ggf. auch der notwendige Abstand A festgelegt werden.

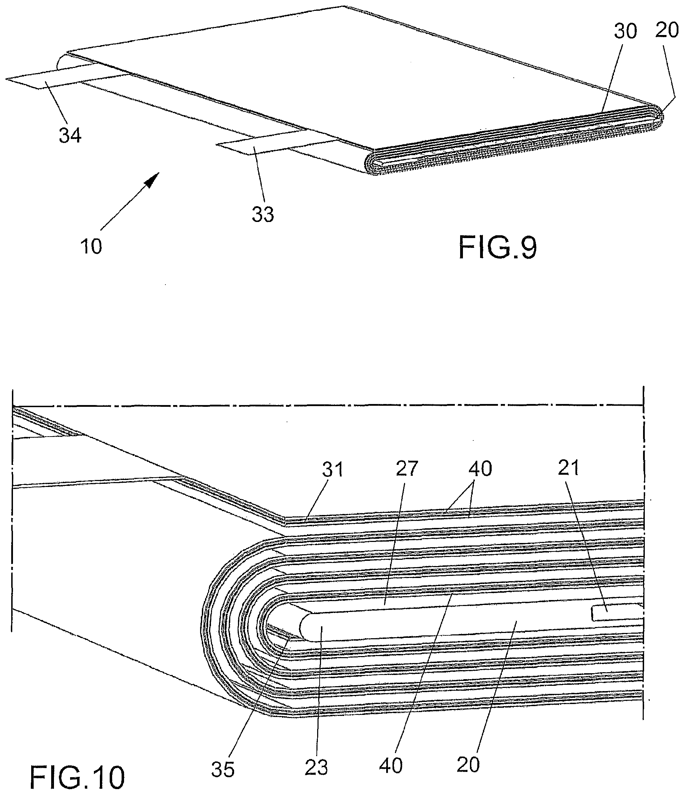

Fig. 9 und Fig. 10 zeigt eine Ausführung eines neuen Batterieelementes 10, bei dem das Mehrkammerhohlprofil 20 von einer Batteriezelle umwickelt ist. Hier ist die Batteriezelle sehr flach, besitzt zwei flache langgestreckte Elektroden 31, welche durch Separatoren getrennt und von einem Beutel aus siegelfähiger Folie 40 umfasst sind. Diese flache Batteriezelle hat eine vergleichsweise große Beutellänge ausgehend von dem einen Ende, an welchem die Kontaktfahnen 33, 34 aus dem Folienbeutel herausreichen bis zum anderen Ende, den Beutelboden 35. Diese lange beutelartige Batteriezelle wird um das Mehrkammerhohlprofil 20 herumgewickelt und vorzugsweise über eine Verschmelzung der siegelfähige Folie 40 des Folienbeutels am Mehrkammerhohlprofil 20 gehalten. Diese Verbindung ist hier einerseits im Bereich des Beutelbodens 35 und hier mit dem Längsrand 23 des Mehrkammerhohlprofils 20 vorgenommen worden. Andererseits sind im Bereich der Kontaktfahnen 33, 34 zwei aneinander liegende Folien 40 miteinander verbunden. Es ergibt sich ein Batterieelement 10 mit einem gewickelten Elektrodenstapel 30, in welchem ein Wärmeleitelement in Form des Mehrkammerhohlprofils 20 integriert ist. Auch diese Ausführungsform zeigt eine gute thermische Anbindung.

Bezugszeichen

| 10 | Batterieelement |
| 20 | Mehrkammerhohlprofil |
| 21 | Kammern |
| 22 | Stege |
| 23, 24 | Längsrand |
| 25 | Oberseite |
| 26 | Unterseite |
| 27 | Kunststoffbeschichtung |
| 28, 29 | Stirnseite |
| 30, 30' | Elektrodenstapel |
| 31 | Elektroden |
| 32 | Separatoren |
| 33, 34 | Kontaktfahnen |
| 35 | Beutelboden |
| 40, 40' | äußere Folie |
| 50 | Sammelrohr |
| 60 | Anschluss |
| 70 | Abstandhalter |
| 71 | Nut |

| A | Abstand von 10 |
| B | Breite von 20 |
| $B_E$ | Breite von 30, 30' |
| $B_K$ | Breite von 21 |
| $B_R$ | Breite von 23, 24 |
| Ds | Dicke von 22 |
| Dw | Wanddicke |
| H | Höhe von 20 |
| $H_B$ | Höhe Batteriezelle |

**Patentansprüche**

1. Batterieelement (10) ohne Rahmen zum Einstecken in ein Gehäuse eines Batteriemoduls,

   - mit mindestens einem Elektrodenstapel (30, 30'),
   - wobei der jeweilige Elektrodenstapel (30, 30') von einer äußeren, elektrischen Isolierung umgeben ist und diese Isolierung eine flexible siegelfähigen Folie (40, 40') umfasst,
   - mit einem der Kühlung oder Heizung dienendem Wärmeleitelement in Form eines oder mehrerer flacher Mehrkammerhohlprofile (20), wobei das jeweilige Mehrkammerhohlprofil (20) im Batterieelement (10) integriert ist,
   - wobei das Mehrkammerhohlprofil (20) im Inneren mehrere benachbart zueinander angeordnete, parallel verlaufende Kammern (21) besitzt,
   **dadurch gekennzeichnet, dass**
   - eine breite Seitenfläche des Mehrkammerhohlprofils (20) in flächigen Kontakt mit der Seitenfläche mindestens eines isolierten Elektrodenstapels (30, 30') steht und der jeweilige isolierte Elektrodenstapel (30, 30') mit dem Mehrkammerhohlprofil (20) verbunden ist
   - wobei der jeweilige Elektrodenstapel (30, 30') von der äußeren siegelfähigen Folie (40, 40') vollständig umgeben ist oder die äußere, elektrisch isolierende, siegelfähigen Folie (40, 40') zusammen mit dem Mehrkammerhohlprofil (20) den jeweilige Elektrodenstapel (30, 30') umhüllen.

2. Batterieelement nach Anspruch 1, **dadurch ge-**

**kennzeichnet, dass** der jeweilige Elektrodenstapel (30, 30') mit seiner isolierten Oberseite oder seiner isolierten Unterseite flächig an einer Breitseite des Mehrkammerhohlprofil (20) anliegt und mit diesem fest verbunden ist.

3.  Batterieelement nach Anspruch 1 oder 2, **dadurch gekennzeichnet, dass** die Elektrodenstapel (30, 30') mit ihrer äußeren Folie (40, 40') eine Batteriezelle bilden, wobei die Elektrodenstapel (30, 30') über diese Folie (40, 40') mit dem Mehrkammerhohlprofil (20) verbunden sind.

4.  Batterieelement nach Anspruch 3, **dadurch gekennzeichnet, dass** die Batteriezelle zwei lang gestreckte Elektroden (31) enthält und von einer äußeren Folie (40) umhüllt ist, wobei diese Batteriezelle um das flache Mehrkammerhohlprofil (20) herum gewickelt und an diesem Mehrkammerhohlprofil (20) gehalten ist.

5.  Batterieelement nach einem der Ansprüche 1 bis 4, **dadurch gekennzeichnet, dass** der wärmeleitende Kontakt zwischen Elektrodenstapel (30, 30') bzw. Batteriezelle und Mehrkammerhohlprofil (20) durch ein elastisches Spannelement, beispielsweise eine Folie oder ein Gewebe hergestellt wird.

6.  Batterieelement nach einem der Ansprüche 1 bis 5, **dadurch gekennzeichnet, dass** eine gute thermische Anbindung der Elektrodenstapel (30, 30') an das Mehrkammerprofil (20) vorliegt, welche sich in einer thermische Kennzahl TK > 0,8 und ein Geometriefaktor G von 1,3 bis 25 ausdrückt.

7.  Batterieelement nach einem der Ansprüche 1 bis 6, **dadurch gekennzeichnet, dass** das Mehrkammerhohlprofil (20) an der Außenseite eine elektrisch isolierende, thermoplastische Kunststoffbeschichtung (27) besitzt.

8.  Batterieelement nach Anspruch 7, **dadurch gekennzeichnet, dass** die elektrisch isolierende, thermoplastische Kunststoffbeschichtung (27) des Mehrkammerhohlprofils (20) einen Teil der Isolierung der Elektrodenstapel (30, 30') darstellt und die äußere Folie (40, 40') den anderen Teil der Isolierung bildet.

9.  Batterieelement nach Anspruch 7, **dadurch gekennzeichnet, dass** eine umlaufend um einen Elektrodenstapel (30) vorgesehene äußere Folie (40) mit der thermoplastischen Kunststoffbeschichtung (27) des Mehrkammerhohlprofils (20) verschweißt ist.

10. Batterieelement nach einem der Ansprüche 1 bis 9, **dadurch gekennzeichnet, dass** das Mehrkammerhohlprofil (20) ein stranggepresstes Profil aus Aluminium oder einer Aluminiumlegierung ist und die obere Breitseite bzw. die untere Breitseite des flachen Mehrkammerhohlprofils (20) plane Kontaktflächen für einen oder mehrere Elektrodenstapel (30, 30') bilden, wobei vorzugsweise das stranggepresste Mehrkammerhohlprofil (20) eine Höhe (H) von 0,3 bis 10 mm, vorzugsweise 0,8 mm bis 2 mm, besitzt.

11. Batterieelement nach Anspruch 9 oder 10, **dadurch gekennzeichnet, dass** die äußeren Folie (40, 40'), welche die Elektrodenstapel (30) teilweise umgibt, im Bereich der Längsränder (23, 24) mit dem Mehrkammerhohlprofil (20) verschweißt ist, wobei vorzugsweise das Mehrkammerhohlprofil (20) breiter als der bzw. die Elektrodenstapel (30, 30') ist, nämlich die Elektrodenstapel (30, 30') mit ihren Längsrändern (23, 24) überragt und an den Längsränder (23, 24) des Mehrkammerhohlprofils (20) keine Kammern (21) vorgesehen sind.

12. Batterieelement nach einem der Ansprüche 7 bis 11, **dadurch gekennzeichnet, dass** die thermoplastische Kunststoffbeschichtung (27) durch eine Pulverbeschichtung, eine Nasslackbeschichtung oder als Folie auf die Oberfläche des Mehrkammerhohlprofils (20) aufgebracht ist, wobei die Folie siegelfähig ist.

13. Batterieelement nach einem der Ansprüche 1 bis 12, **dadurch gekennzeichnet, dass** zur Verbesserung der Haftung die Oberfläche des Mehrkammerhohlprofils (20) chemisch oder mechanisch vorbehandelt ist, vorzugsweise durch Eloxieren oder durch Konversionsbeschichten oder durch Lichtbogenverzinken oder durch eine Plasmabehandlung oder durch eine Laserbehandlung.

14. Batterieelement nach einem der Ansprüche 1 bis 13, **dadurch gekennzeichnet, dass** die Kammern (21) des Mehrkammerhohlprofils (20) mit Sammlerrohren (50) oder Anschlüssen (60) für ein Temperiermedium verbunden sind, wobei sich diese Verbindungen mit den Sammlerrohren (50) oder Anschlüssen (60) an den Stirnseiten (28, 29) des Mehrkammerhohlprofils (20) außerhalb der Folie (40, 40') befinden und die Verbindung der Mehrkammerhohlprofile (20) mit den Sammlerrohren (50) oder den Anschlüssen (60) mittels Löten, insbesondere Hartlöten, erfolgt ist.

15. Batterieelement gemäß einem der Ansprüche 1 bis 14, **dadurch gekennzeichnet, dass** ein Thermoelement vorgesehen ist, welches mit einem Längsrand (23, 24) des Mehrkammerhohlprofils (20) verbunden ist.

16. Batteriemodul mit mehreren Batterieelementen (10) gemäß einem der Ansprüche 1 bis 15,

- welche nebeneinander, vorzugsweise vertikal ausgerichtet, und mit einem Abstand (A) zu einem Batteriemodul zusammengesetzt sind, wobei der Abstand (A) eine thermische Ausdehnung ohne gegenseitige Berührung der Batterieelemente (10) ermöglicht, und
- wobei vorzugsweise jedes Batterieelement (10) jeweils Anschlüsse an den Stirnseiten (28, 29) des Mehrkammerhohlprofils (20) umfasst und die Batterieelemente (10) über Abstandhalter (70) zusammen gehalten werden.

**Claims**

1. Battery element (10) without frame for insertion into a housing of a battery module,

    - with at least one electrode stack (30, 30'),
    - wherein the respective electrode stack (30, 30') is surrounded by an outer electrical insulation and this insulation comprises a flexible sealable film (40, 40'),
    - with a heat conducting element serving for cooling or heating in the form of one or more flat multi-chamber hollow profiles (20), wherein the respective multi-chamber hollow profile (20) is integrated in the battery element (10),
    - wherein the multi-chamber hollow profile (20) has a plurality of chambers (21) arranged adjacent to one another and running parallel to one another in the interior,
    **characterised in that**
    - a wide side surface of the multi-chamber hollow profile (20) is in planar contact with the side surface of at least one insulated electrode stack (30, 30'), and the respective insulated electrode stack (30, 30') is connected to the multi-chamber hollow profile (20),
    - with the respective electrode stack (30, 30') being completely surrounded by the outer sealable film (40, 40') or the outer, electrically insulating, sealable film (40, 40') together with the multi-chamber hollow profile (20) enveloping the respective electrode stack (30, 30').

2. Battery element according to claim 1, **characterised in that** the respective electrode stack (30, 30') lies with its insulated upper side or its insulated lower side flat against a wide side of the multi-chamber hollow profile (20) and is firmly connected thereto.

3. Battery element according to claim 1 or 2, **characterised in that** the electrode stacks (30, 30') form a battery cell with their outer film (40, 40'), the electrode stacks (30, 30') being connected to the multi-chamber hollow profile (20) via this film (40, 40').

4. Battery element according to claim 3, **characterised in that** the battery cell contains two elongated electrodes (31) and is enveloped by an outer film (40), this battery cell being wrapped around the flat multi-chamber hollow profile (20) and held on this multi-chamber hollow profile (20).

5. Battery element according to one of claims 1 to 4, **characterised in that** the thermally conductive contact between electrode stack (30, 30') or battery cell and multi-chamber hollow profile (20) is produced by an elastic tensioning element, for example a film or a mesh.

6. Battery element according to one of claims 1 to 5, **characterised in that** there is a good thermal connection of the electrode stacks (30, 30') to the multi-chamber profile (20), which is expressed in a thermal coefficient TC > 0.8 and a geometry factor G of 1.3 to 25.

7. Battery element according to one of claims 1 to 6, **characterised in that** the multi-chamber hollow profile (20) has an electrically insulating, thermoplastic plastic coating (27) on the outside.

8. Battery element according to claim 7, **characterised in that** the electrically insulating, thermoplastic plastic coating (27) of the multi-chamber hollow profile (20) forms part of the insulation of the electrode stacks (30, 30') and the outer film (40, 40') forms the other part of the insulation.

9. Battery element according to claim 7, **characterised in that** an outer film (40) provided circumferentially around an electrode stack (30) is welded to the thermoplastic coating (27) of the multi-chamber hollow profile (20).

10. Battery element according to one of claims 1 to 9, **characterised in that** the multi-chamber hollow profile (20) is an extruded profile made of aluminium or an aluminium alloy and the upper wide side or the lower wide side of the flat multi-chamber hollow profile (20) form flat contact surfaces for one or more electrode stacks (30, 30'), the extruded multi-chamber hollow profile (20) preferably having a height (H) of 0.3 to 10 mm, preferably 0.8 mm to 2 mm.

11. Battery element according to claim 9 or 10, **characterised in that** the outer film (40, 40'), which partially surrounds the electrode stacks (30), is welded to the multi-chamber hollow profile (20) in the region of the longitudinal edges (23, 24), the multi-chamber hollow profile (20) preferably being wider than the electrode stack(s) (30, 30'), namely projecting beyond the electrode stacks (30, 30') with its longitudinal edges (23, 24) and no chambers (21) are provided on the longitudinal edges (23, 24) of the multi-chamber hollow profile (20).

**12.** Battery element according to one of claims 7 to 11, **characterised in that** the thermoplastic polymer coating (27) is applied to the surface of the multi-chamber hollow profile (20) by a powder coating, a wet paint coating or as a film, the film being sealable.

**13.** Battery element according to one of claims 1 to 12, **characterised in that** the surface of the multi-chamber hollow profile (20) is chemically or mechanically pretreated to improve adhesion, preferably by anodising or by conversion coating or by arc galvanising or by plasma treatment or by laser treatment.

**14.** Battery element according to one of claims 1 to 13, **characterised in that** the chambers (21) of the multi-chamber hollow profile (20) are connected to collector pipes (50) or connections (60) for a temperature control medium, these connections to the collector tubes (50) or connections (60) being located on the end faces (28, 29) of the multi-chamber hollow profile (20) are located outside the film (40, 40') and the connection of the multi-chamber hollow profiles (20) to the collector tubes (50) or the connections (60) is effected by means of soldering, in particular brazing.

**15.** Battery element according to one of claims 1 to 14, **characterised in that** a thermocouple is provided which is connected to a longitudinal edge (23, 24) of the multi-chamber hollow profile (20).

**16.** Battery module comprising a plurality of battery elements (10) according to any one of claims 1 to 15,

- which are assembled side by side, preferably vertically aligned, and with a distance (A) to a battery module, the distance (A) allowing thermal expansion without mutual contact of the battery elements (10), and
- wherein preferably each battery element (10) comprises respective connections on the end faces (28, 29) of the multi-chamber hollow profile (20) and the battery elements (10) are held together by spacers (70).

**Revendications**

**1.** Élément (10) de batterie sans cadre, à enficher dans le boîtier d'un module à batteries,

- comprenant au moins une pile d'électrodes (30, 30'),
- sachant que la pile d'électrodes (30, 30') respective est entourée d'un isolant électrique et que cet isolant comprend un film (40, 40') scellable flexible,
- comprenant un élément thermoconducteur servant au refroidissement ou au chauffage et ayant la forme d'un ou plusieurs profilé(s) creux (20) multichambres plat(s), sachant que le profilé creux (20) multichambres respectif est intégré dans l'élément (10) de batterie,
- sachant que le profilé creux (20) multichambres possède à l'intérieur plusieurs chambres (21) disposées voisines les unes des autres et présentant un tracé parallèle,
**caractérisé en ce qu'**
- une surface latérale large du profilé creux (20) multichambres se trouve en contact à plat avec la surface latérale d'au moins une pile d'électrodes (30, 30') isolée, et que la pile d'électrodes (30, 30') isolée est reliée avec le profilé creux (20) multichambres,
- sachant que la pile d'électrodes (30, 30') respective est entièrement entourée par le film extérieur (40, 40') scellable, ou que le film extérieur (40, 40') scellable électro-isolant et le profilé creux (20) multichambres enveloppent la pile d'électrodes (30, 30') respective.

**2.** Élément de batterie selon la revendication 1, **caractérisé en ce que** la pile d'électrodes (30, 30') respective applique à plat, par sa surface supérieure isolée ou par sa surface inférieure isolée, contre un côté large du profilé creux (20) multichambres et qu'elle est fermement reliée à lui.

**3.** Élément de batterie selon la revendication 1 ou 2, **caractérisé en ce que** la pile d'électrodes (30, 30') forme, avec son film extérieur (40, 40'), une cellule de batterie, sachant que la pile d'électrodes (30, 30') est reliée via ce film (40, 40') avec le profilé creux (20) multichambres.

**4.** Élément de batterie selon la revendication 3, **caractérisé en ce que** la cellule de batterie contient deux électrodes (31) longilignes et qu'elle est enveloppée dans un film extérieur (40), sachant que la cellule de batterie est enroulée autour du profilé creux (20) multichambres plat et qu'elle est retenue contre ce profilé creux (20) multichambres.

**5.** Élément de batterie selon l'une des revendications 1 à 4, **caractérisé en ce que** le contact thermoconducteur entre la pile d'électrodes (30, 30'), la cellule de batterie et le profilé creux (20) multichambres est établi au moyen d'un élément de serrage élastique, par exemple d'un film ou d'un textile.

**6.** Élément de batterie selon l'une des revendications 1 à 5, **caractérisé en ce qu'**il y a présence d'un bon raccordement thermique de la pile d'électrodes (30, 30') au profilé creux (20) multichambres, lequel raccordement s'exprime par un coefficient thermique TK > 0,8 et un facteur géométrique G compris entre 1,3 et 25.

7. Élément de batterie selon l'une des revendications 1 à 6, **caractérisé en ce que** le profilé creux (20) multichambres possède, contre le côté extérieur, un revêtement synthétique (27) thermoplastique électro-isolant.

8. Élément de batterie selon la revendication 7, **caractérisé en ce que** le revêtement synthétique (27) thermoplastique électro-isolant du profilé creux (20) multichambres représente une partie de l'isolant de la pile d'électrodes (30, 30') et que le film extérieur (40, 40') forme l'autre partie de l'isolant.

9. Élément de batterie selon la revendication 7, **caractérisé en ce qu'**un film extérieur (40) prévu pour entourer périphériquement une pile d'électrodes (30) est soudé contre le revêtement synthétique (27) thermoplastique du profilé creux (20) multichambres.

10. Élément de batterie selon l'une des revendications 1 à 9, **caractérisé en ce que** le profilé creux (20) multichambres est un profilé en aluminium ou en alliage d'aluminium extrudé à la presse, et que le côté large supérieur et le côté large inférieur du profilé creux (20) multichambres plat forment des surfaces de contact planes pour une ou plusieurs pile(s) d'électrodes (30, 30'), sachant que de préférence le profilé creux (20) multichambres extrudé à la presse possède une hauteur (H) comprise entre 0,3 et 10 mm, de préférence entre 0,8 et 2 mm.

11. Élément de batterie selon la revendication 9 ou 10, **caractérisé en ce que** le film extérieur (40, 40') qui entoure partiellement la pile d'électrodes (30) est soudé dans la zone des bords longitudinaux (23, 24) avec le profilé creux (20) multichambres, sachant que de préférence le profilé creux (20) multichambres est plus large que la ou les pile(s) d'électrodes (30, 30'), à savoir que ses bords longitudinaux (23, 24) dépassent les piles d'électrodes (30, 30') et que contre les bords longitudinaux (23, 24) du profilé creux (20) multichambres n'est prévue aucune chambre (21).

12. Élément de batterie selon l'une des revendications 7 à 11, **caractérisé en ce que** le revêtement synthétique (27) thermoplastique est appliqué sous la forme d'un revêtement pulvérulent, d'un revêtement de peinture liquide ou d'un film sur la surface du profilé creux (20) multichambres, sachant que le film est scellable.

13. Élément de batterie selon l'une des revendications 1 à 12, **caractérisé en ce que** pour améliorer l'adhérence la surface du profilé creux (20) multichambres a subi un prétraitement chimique ou mécanique, de préférence par anodisation ou par revêtement de conversion ou par zingage à l'arc électrique ou par traitement plasmatique ou par traitement au laser.

14. Élément de batterie selon l'une des revendications 1 à 13, **caractérisé en ce que** les chambres (21) du profilé creux (20) multichambres sont reliées avec des tuyaux collecteurs (50) ou des raccords (60) destinés à un fluide de thermorégulation, sachant que ces liaisons avec les tuyaux collecteurs (50) ou les raccords (60) au niveau des côtés frontaux (28, 29) du profilé creux (20) multichambres se trouvent à l'extérieur du film (40, 40') et que la liaison des profilés creux (20) multichambres avec les tuyaux collecteurs (50) ou avec les raccords (60) est obtenue par brasage, en particulier par brasage fort.

15. Élément de batterie conformément à l'une des revendications 1 à 14, **caractérisé en ce qu'**est prévu un thermocouple relié avec un bord longitudinal (23, 24) du profilé creux (20) multichambres.

16. Module à batteries doté de plusieurs éléments de batterie (10) conformément à l'une des revendications 1 à 15,

- qui sont juxtaposés orientés de préférence à la verticale, et qui sont assemblés avec un écart (A) par rapport à un module à batteries, sachant que l'écart (A) permet une dilatation thermique sans contact des éléments de batterie (10) entre eux, et
- sachant que de préférence chaque élément de batterie (10) comprend respectivement des raccords au niveau des côtés frontaux (28, 29) du profilé creux (20) multichambres, et que les éléments (10) de batterie sont maintenus ensemble via des écarteurs (70).

FIG.1

FIG.2

FIG.4

FIG.3

FIG.5

FIG.6

FIG.7

FIG.8

FIG.9

FIG.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010055599 A1
- US 20160211559 A1
- DE 102012219057 A1
- DE 102011002666 A1
- DE 102011107716 A1